# EUROPÄISCHE PATENTANMELDUNG

(11) **EP 2 712 724 A1**
(43) Veröffentlichungstag der Anmeldung: **02.04.2014**
(21) Anmeldenummer: 13186494.4
(22) Anmeldetag: 27.09.2013
(51) Int. Cl.: B29C 70/54, B29C 33/38, B29C 70/30, B29D 99/00, B29L 31/30

(54) **Integrale Verstärkungselemente**

(30) Priorität: 28.09.2012 DE 102012109231
(71) Anmelder: Deutsches Zentrum für Luft- und Raumfahrt e.V., 51147 Köln (DE)
(72) Erfinder: Bold, Jens, 38106 Braunschweig (DE); Ückert, Christian, 21682 Stade (DE); Hühne, Dr. Christian, 30174 Hannover (DE); Steffen, Olaf, 21073 Hamburg (DE)
(74) Vertreter: Aisch, Sebastian

(57) **Zusammenfassung**

Die Erfindung betrifft ein Verfahren zur Herstellung eines Faserverbundbauteils, das aus einem flächigen Grundelement und angeordneten Verstärkungselementen besteht, wobei die Verstärkungselemente hochintegral aus dem gesamten Formwerkzeug gebildet werden. Die Erfindung betrifft ebenso ein Faserverbundbauteil sowie ein Formwerkzeug zur Herstellung hierzu.

## Beschreibung

Die Erfindung betrifft ein Verfahren zur Herstellung eines Faserverbundbauteils, das aus einem mit einem Matrixharz infiltrierten Faserhalbzeug in einem Formwerkzeug hergestellt wird, wobei das Faserverbundbauteil ein flächiges Grundelement aufweist, auf dem eine Vielzahl von Verstärkungselementen angeordnet ist. Die Erfindung betrifft ebenso ein Faserverbundbauteil hierzu sowie erfindungsgemäß ein entsprechendes Formwerkzeug, mit dem ein derartiges Faserverbundbauteil hergestellt und das Verfahren durchgeführt werden kann.

Aufgrund der besonderen Eigenschaft, bei einem relativ geringen Gewicht eine hohe Festigkeit und Steifigkeit aufzuweisen, werden Faserverbundbauteile mittlerweile in fast allen industriellen Fertigungsgebieten verwendet, insbesondere im Automobil- und Flugzeugbereich. Die dabei entstehenden Einsparungen bezüglich des Gewichtes schlagen sich gerade in diesen wichtigen industriellen Bereichen direkt auf den Energieverbrauch nieder.

Um auch bei großen, flächigen Faserverbundbauteilen eine möglichst hohe Biegesteifigkeit zu gewährleisten, werden derartige flächige Faserverbundbauteile mit Verstärkungselementen versehen, die oft auch Stringer genannt werden. Bei einem Stringer handelt es sich um ein Faserverbundbauelement als Teil des Faserverbundbauteils, dessen Erstreckung außerhalb der Ebene des flächigen Grundelementes liegt und somit auch in diese Richtung eine möglichst hohe Steifigkeit gewährleistet.

Gerade bei der Herstellung eines Flügelkastens eines Tragflügels eines Flugzeuges wird in Spannweitenrichtung des Tragflügels eine Vielzahl von Stringerelementen auf die Innenseite aufgebracht, um so eine möglichst hohe Biegesteifigkeit der Flügelschale zu erreichen. Die Stringerelemente werden dabei an der Innenseite der Flügelschale vorgesehen, während die Außenseite des entsprechenden Faserverbundbauteils die Flügelaußenseite bildet.

Dabei werden grundsätzlich zwei verschiedene Fertigungsverfahren zum Befestigen der Stringer auf dem flächigen Faserverbundbauteil im Stand der Technik unterschieden. Zum Einen werden die Stringerelemente mit Hilfe spezieller Formwerkzeuge ausgeformt und auf die Innenseite des Faserverbundbauteils aufgeklebt, wobei anschließend das gesamte Gebilde durch Temperaturbeaufschlagung ausgehärtet wird. Zwar lässt sich hierdurch ein mehr oder weniger integral gefertigtes Faserverbundbauteil mit Verstärkungselementen herstellen. Allerdings hat dieses Fertigungsverfahren in der Praxis erhebliche Nachteile. So kommt es durch den Reaktionsschrumpf des noch nicht ausgehärteten Flügelteils zur Entstehung von Welligkeiten auf der aerodynamischen Oberfläche des Tragflügels, die einer möglichen angestrebten Laminarströmung des Tragflügels entgegenstehen und den formulierten Anforderungen an die Oberflächenformgenauigkeit nicht mehr genügen. Darüber hinaus lässt sich bei geklebten stringerversteiften Schalenstrukturen häufig das Phänomen beobachten, dass es zwischen dem flächigen Grundelement des Faserverbundbauteils und dem Stringerfuß zu einem Steifigkeitssprung kommt, der maßgeblich dafür verantwortlich ist, dass Schlagbeanspruchungen (Impacts) auf das Bauteil, wie sie bei Tragflügeln häufig vorkommen, nicht gleichmäßig im gesamten Bauteil verteilt werden. Vielmehr kommt es in diesen Bereichen zu hohen Spannungskonzentrationen, die dann dazu führen, dass die Klebung zwischen dem flächigen Grundelement und dem Stringer versagt und sich der Stringer großflächig von dem Grundelement ablöst (sogenanntes Stringer-Debonding). Auf die Flügelhaut aufgeklebte Stringer werden daher in der Regel an ihren Enden durch eine zusätzliche Nietverbindung gesichert.

Eine weitere Möglichkeit, die Stringerelemente mit dem flächigen Grundelement des Faserverbundbauteils zu verbinden, besteht darin, die Stringer mit Hilfe einer Nietverbindung an dem Faserverbundbauteil anzuordnen. Hierdurch kann zwar das Stringer-Debonding grundsätzlich vermieden werden, allerdings müssen hierfür durch das flächige Grundelement entsprechende Nietverbindungen geschlagen werden, wodurch an der Außenseite des Tragflügels entsprechende Nietköpfe in der Luftströmung verbleiben. Derartige Nietköpfe an der Außenseite eines Tragflügels führen jedoch zu Luftverwirbelungen und stehen somit in einer laminaren Strömung, mit der insbesondere im Bereich der Verkehrsflugzeuge hohe Treibstoffeinsparungen realisiert werden könnten, entgegen. Der Effekt, mit Hilfe von eingespartem Gewicht den Treibstoffverbrauch zu reduzieren, würde durch die hohen Luftverwirbelungen an den Oberflächen der Flügel aufgrund der vorstehenden Nietköpfe wieder zunichte gemacht, so dass eine solche Nietverbindung für einen laminar umströmten Flügel keine adäquate Lösung zur Verbindung von flächigen Grundelementen mit Stringern darstellt.

Eine weitere Anforderung, die an die Herstellung eines Flügelkastens für Tragflügel von Flugzeugen gestellt wird, ist die Möglichkeit der Befestigung von sogenannten Rippen. Rippen sind quer zur Spannweitenrichtung des Tragflügels verlaufende Elemente, die die auf die Flügelschale wirkenden Luftlasten aufnehmen und an die Holmstruktur weiterleiten. Die Rippen dienen somit auch der Einhaltung der geforderten Profilkontur des Flügels.

Hierbei besteht das Problem, dass die Rippen des Flügelkastens an der Innenseite des Tragflügel-Faserverbundbauteils befestigt werden müssen, so dass hier meist so genannte "Rip-Caps" vorgesehen sind. "Rip-Caps" sind abgewinkelte Befestigungselemente, mit denen die Rippen, beispielsweise mit der Hilfe einer Nietverbindung, fest mit der Flügelschale verbunden werden können. Hierfür ist es allerdings notwendig, dass die Positionen der "Rip-Caps" innerhalb des sehr kleinen Fehlertoleranzbereiches liegen, damit die später angefügten Rippen spannungsfrei befestigt werden können. Die oft bei der Faserverbundfertigung verwendete schwimmende Lagerung von Modulkernen führt aufgrund der Harzvernetzungsreaktion und der damit einhergehenden Positionsverschiebung derlei Faserverbundbauelementen zu einem ungenügenden Ergebnis, so dass die Maßhaltigkeit durch den zusätzlichen Auftrag von Füllmassen hergestellt werden muss. Der für diesen Arbeitsschritt erforderliche Zeitaufwand und die resultierende Zusatzmasse lassen eine solche Fertigung im Bereich der Flügelschalen insbesondere für eine Serienproduktion in großen Stückzahlen nicht geeignet erscheinen.

Vor diesem Hintergrund ist es Aufgabe der vorliegenden Erfindung ein verbessertes Faserverbundbauteil sowie ein verbessertes Formwerkzeug anzugeben, mit deren Hilfe die aus den Stand der Technik bekannten Nachteile bei der Herstellung von stringerversteiften Faserverbundbauelementen vermieden werden können. Es ist insbesondere Aufgabe der Erfindung, eine nietfreie Anordnung von Verstärkungselementen auf flächigen Faserverbundbauteilen anzugeben, ohne dass unzulässige Formabweichungen auftreten und die Gefahr von dem sogenannten Stringer-Debonding bei Schlagbeanspruchungen befürchtet werden muss. Darüber hinaus ist es ebenfalls Aufgabe der Erfindung ein Verfahren und ein Formwerkzeug anzugeben, mit dem nicht nur eine solche hochintegrale Bauweise ermöglicht werden kann, sondern bei dem auch die Position der angeordneten Verstärkungselemente sich während des gesamten Herstellungsprozesses nicht verändert.

Die Aufgabe wird mit den Merkmalen des Verfahrens gemäß Patentanspruch 1 erfindungsgemäß gelöst. Die Aufgabe wird auch mit dem Faserverbundbauteil gemäß Anspruch 7 erfindungsgemäß gelöst. Die Aufgabe wird im Übrigen ebenfalls mit dem Formwerkzeug gemäß Anspruch 9 erfindungsgemäß gelöst. Gemäß Anspruch 1 wird ein Verfahren zur Herstellung eines Faserverbundbauteils vorgeschlagen, wobei das Faserverbundbauteil aus einem mit einem Matrixharz infiltrierten Faserhalbzeug in einem Formwerkzeug hergestellt wird. Das Faserverbundbauteil weist dabei ein flächiges Grundelement auf, auf dem eine Vielzahl von Verstärkungselementen angeordnet ist. Unter dem flächigen Grundelement wird dabei der flächige Teil des Faserverbundbauelementes verstanden, wobei die Fläche zwangsläufig nicht eben sein muss. Vielmehr ist es insbesondere mit Blick auf die Tragflügel auch denkbar, dass die Fläche einfach oder mehrfach gekrümmt ist.

Erfindungsgemäß wird nunmehr vorgeschlagen, dass ein Formwerkzeug bereitgestellt wird, das eine Mehrzahl von Formkernen aufweist. Die Formkerne dienen dabei dazu, die entsprechenden Verstärkungselemente auf dem flächigen Grundelement auszubilden. Hierfür weisen die Formkerne jeweils eine Grundfläche zur Bildung des flächigen Grundelementes und daran anschließende Seitenflächen zur Bildung der Verstärkungselemente auf. Ein solcher Formkern kann beispielsweise ein Quader sein, bei dem eine Fläche die Grundfläche ist und die an diese Fläche (Grundfläche) anschließenden Flächen die Seitenflächen für die Verstärkungselemente darstellen. Vorzugsweise weist der Formkern abgerundete Ecken auf, um ein Drapieren von Faserlagen zu vereinfachen.

Im nächsten Schritt werden auf den Formkernen entsprechende Faserlagen, die Bestandteil des Faserhalbzeuges des Faserverbundbauteils sind, so drapiert, dass die Grundfläche sowie die Seitenflächen zur Bildung der Verstärkungselemente eines Formkernes durch mindestens eine zusammenhängende, gemeinsame Faserlage abgedeckt sind. Hierdurch wird erreicht, dass zumindest ein Teil des flächigen Grundelementes und mindestens zwei gegenüberliegende und/oder benachbart angrenzende Verstärkungselemente aus einer gemeinsamen, zusammenhängenden Faserlage gebildet werden, so dass sich später ein hochintegrales Faserverbundbauteil ergibt.

Anschließend werden die mit den Faserlagen abgedeckten Formkerne an ihren jeweiligen Seitenflächen zu einem Formkernverbund zusammengefügt, so dass Faserlagen von Seitenflächen, an denen zwei benachbarte Formkerne zusammengefügt sind, mindestens einen Teil eines Verstärkungselementes bilden. Ist der Formkern beispielsweise ein Quader, so bilden die jeweils gegenüberliegenden Seitenflächen später beim fertigen Faserverbundbauteil jeweils gegenüberliegende Verstärkungselemente, die jeweils erst durch das Zusammenfügen mindestens zweier Formkerne an ihren jeweiligen Seitenflächen vollständig gebildet werden. So wird ein Verstärkungselement sowohl durch die gemeinsame, zusammenhängende Faserlage eines ersten Formkernes als auch durch die gemeinsame, zusammenhängende Faserlage eines zweiten Formkernes durch das Zusammenfügen der Formkerne an ihren jeweiligen Seitenflächen gebildet, wodurch ein hochintegrales Bauteil mit Verstärkungselementen herstellbar wird.

Die Formkerne weisen jeweils ein erstes Paar gegenüberliegender Seitenflächen und ein zweites Paar gegenüberliegender Seitenflächen auf. Dabei werden die Formkerne zunächst an ihren jeweils ersten Paar gegenüberliegenden Seitenflächen zu einer Mehrzahl von Formkernreihen zusammengefügt, während anschließend diese Formkernreihen an den jeweils zweiten Paar gegenüberliegender Seitenflächen der Formkerne zu dem Formkernverbund zusammengefügt werden.

Hierdurch können insbesondere Steifigkeitssprünge durch Wegfall der Verstärkungselement-Füße vermieden werden, wodurch sich eine gleichmäßige Kraftverteilung bei Beanspruchung des Bauteils ergibt. Somit können Spannungsspitzen an den Übergängen zwischen Verstärkungselement und flächigen Grundelement des Faserverbundbauteils vermieden werden, die in der Regel zu einer höheren Beanspruchung des Bauteils führen.

Anschließend wird der Faserverbund-Herstellungsprozess zur Herstellung des Faserverbundbauteils mit den integral gebildeten Verstärkungselementen durchgeführt. Die Durchführung eines derartigen Faserverbund-Herstellungsprozesses erfolgt in der Regel durch Temperatur- und/oder Druckbeaufschlagung des gesamten Bauteils, beispielsweise in einem Autoklaven, wodurch das Matrixharz, mit dem das Faserhalbzeug getränkt ist, ausgehärtet wird.

Die Faserlagen des Faserhalbzeuges können beispielsweise trockene Faserhalbzeuge sein, die dann auf den Formkernen drapiert werden. Erst im zusammengebauten Zustand des vollständigen Formkernverbundes wird dann das Matrixharz über eine Infusionsleitung injiziert, wodurch die trockenen Faserhalbzeuge vollständig getränkt werden. Denkbar ist aber auch, dass die Faserhalbzeuge bereits vorgetränkt sind (sogenannte Prepregs), so dass ein späterer Injektionsprozess bei dem fertigen Formkernverbund nicht mehr notwendig wird.

Ein Vorteil dieses Verfahrens besteht darin, dass die Verstärkungselemente integral mit dem vollständigen Faserverbundbauteil, insbesondere mit dem flächigen Grundelement, verbunden sind, was zu einer besseren Kraftverteilung und der Vermeidung von Steifigkeitssprüngen und Reduzierung von Formabweichungen führt. Darüber hinaus wird das sogenannte Stringer-Debonding vermieden, da die Verstärkungselemente selber nicht mehr nur einseitig auf dem flächigen Grundelement aufgeklebt sind. Des Weiteren wird eine nietbelastete Oberfläche durch eine Nietverbindung zwischen Faserverbundbauteil und Verstärkungselementen vermieden, was insbesondere bei Flügeloberschalen hinsichtlich der gewünschten Laminarströmung vorteilhaft ist. Dies wiederum führt zu einer Einsparung von Treibstoff.

Hierdurch wird es möglich, dass ein Faserverbundbauteil herstellbar wird, das sich kreuzende Verstärkungselemente in mindestens zwei Richtungen aufweist, wodurch eine größtmögliche Stabilität des gesamten Bauteils erreicht wird. Dabei werden sämtliche Verstärkungselemente integral aus dem gesamten Bauteil herausmodelliert, was die bereits vorstehend genannten Vorteile hat.

Hierbei ist es ganz besonders vorteilhaft, wenn nach Zusammenfügen der Formkerne zu den jeweiligen Formkernreihen die Formkernreihen durch eine Faserlage U-förmig abgedeckt werden, so dass die Grundflächen der Formkernreihen sowie die Seitenflächen des zweiten Paar Seitenflächen der Formkerne abgedeckt werden. Hierdurch wird der Integritätsgrad deutlich erhöht, was zu einer wesentlich besseren Kraftverteilung bei Schlagbeanspruchung führt. Die Verstärkungselemente werden somit sowohl aus den Faserlagen benachbarter Formkerne als auch aus den Faserlagen der U-förmigen zusätzlichen Faserlagen der Formkernreihen gebildet.

Des Weiteren ist es besonders vorteilhaft, wenn der vollständig zusammengeführte Formkernverbund mit zumindest einer Faserlage abgedeckt wird, so dass sich ein hochintegrales Bauteil ergibt.

Des Weiteren ist es denkbar, dass beim Zusammenfügen neuer Formkerne an ihren jeweiligen Seitenflächen eine oder mehrere zusätzliche Faserlagen, die weder Bestandteil der Faserlage des einen noch des anderen Formkerne sind, eingefügt werden, um so die erforderlichen mechanischen Eigenschaften im Bereich der Verstärkungselemente zu erreichen.

In einer weiteren vorteilhaften Ausführungsform werden die mit den Faserlagen abgedeckten Formkerne auf einer Grundplatte des Formwerkzeuges mit Hilfe von Befestigungsmitteln fixiert, so dass während des Faserverbund-Herstellungsprozesses beim Aushärten des Matrixharzes keine Positionsverschiebungen der Formkerne, wie dies beispielsweise bei schwimmend gelagerten Modulkernen häufig vorkommt, entsteht. Durch das Fixieren der Formkerne auf einer Grundplatte des Formwerkzeuges wird vielmehr erreicht, dass die Positionen der Verstärkungselemente des späteren Faserverbundbauteils festgelegt sind.

In einer weiteren besonders vorteilhaften Ausführungsform wird ein Formwerkzeug mit Formkernen bereitgestellt, bei dem die Formkerne ein Material aufweisen, das einen höheren Wärmeausdehnungskoeffizienten hat, als das Material der übrigen Elemente des Formwerkzeuges, insbesondere das Material der Grundplatte des Formwerkzeuges. In Verbindung mit einer Fixierung der einzelnen Formkerne auf der Grundplatte und den unterschiedlichen Materialien mit unterschiedlichen Wärmeausdehnungskoeffizienten wird der Effekt erreicht, dass während des Faserverbund-Herstellungsprozesses sich die Formkerne aufgrund der Temperaturbeaufschlagung stärker ausdehnen als die übrigen Elemente des Formwerkzeuges, wodurch die zwischen den Formkernen liegenden Faserlagen der Seitenflächen kompaktiert werden, um den gewünschten Faservolumengehalt zu erzielen.

Werden die Formkerne nunmehr noch auf der Grundplatte mit Befestigungsmitteln so fixiert, dass sie sich lediglich in zumindest eine Richtung einer Seitenfläche ausdehnen können, so ist gewährleistet, dass zumindest immer eine Seitenfläche und das damit korrespondierende Verstärkungselement immer an ein und derselben Position verbleibt, während es in einer anderen Richtung aufgrund der Wärmeausdehnung kompaktierbar wird.

Darüber hinaus wird erfindungsgemäß ein Faserverbundbauteil vorgeschlagen, bei dem mindestens zwei gegenüberliegende und/oder benachbart angrenzende Verstärkungselemente mindestens eine zusammenhängende, gemeinsame Faserlage aufweisen, wodurch sich ein hochintegrales Faserverbundbauteil ergibt. Ein derartiges Faserverbundbauteil kann beispielsweise mit dem vorstehend genannten Verfahren hergestellt werden. Hierbei ist selbstverständlich besonders vorteilhaft, wenn der durch die Verstärkungselemente umgrenzte Bereich des Grundelementes ebenfalls die zusammenhängende, gemeinsame Faserlage aufweist, die Bestandteil der umgrenzenden Verstärkungselemente ist. So werden gegenüberliegende und/oder benachbart angrenzende Verstärkungselemente aus einer gemeinsamen, zusammenhängenden Faserlage so gebildet, dass die Faserlage auch Bestandteil des flächigen Grundelementes ist.

Darüber hinaus wird erfindungsgemäß ein Formwerkzeug vorgeschlagen, das eine Mehrzahl von Formkernen aufweist. Die Formkerne haben jeweils eine Grundfläche zur Bildung des flächigen Grundelementes und daran anschließende Seitenflächen zur Bildung der Verstärkungselemente. Das Formwerkzeug weist des Weiteren eine Grundplatte auf, die zur Aufnahme der Formkerne zum Zusammenfügen der Formkerne zu einem Formkernverbund so ausgebildet ist, dass die Formkerne jeweils über entsprechende Befestigungselemente auf der Grundplatte lagefixiert werden können, wobei die Formkerne mittels der Befestigungselemente zur Lagefixierung derart ausgebildet sind, dass die Formkerne bei Temperierung sich in Richtung zumindest einer Seitenfläche ausdehnen.

Vorteilhafterweise sind die Formkerne mittels der Befestigungselemente zum Lagefixierung derart ausgebildet, dass die Formkerne bei Temperierung sich in Richtung einer Seitenfläche stärker ausdehnen als in Richtung dieser Seitenfläche gegenüberliegende Seitenfläche. Dies kann beispielsweise durch Befestigungselemente erreicht werden, die zur Lagefixierung mittels eines Festlagers und mittels eines in zumindest eine Richtung geführten Loslagers ausgebildet sind.

In einer besonders vorteilhaften Ausführungsform weist das Formwerkzeug mehrere Formkernreihen-Grundplattenelemente auf, auf denen die Formkerne zu einer Formkernreihe zusammengefügt werden können. Beim Zusammenfügen der Formkernreihen werden die einzelnen Formkerne über ein erstes Paar Seitenflächen miteinander zusammengefügt. Darüber hinaus weist das Formwerkzeug ein Formwerkzeug-Grundplattenelement auf, das zur Aufnahme der Formkernreihen-Grundplattenelemente so ausgebildet ist, dass die auf dem Formkernreihen-Grundplattenelemente angeordneten Formkerne nunmehr an ihrem zweiten Paar Seitenflächen zusammengefügt werden können, so dass der Formkernverbund gebildet werden kann. Durch diese mehrschichtige und modulare Bauweise des Formwerkzeuges wird ein einfacher Aufbau auch bei einer großen Anzahl von Formkernen ermöglicht.

Auch hier ist es vorteilhaft, wenn die Formkerne ein Material aufweisen, das einen höheren Wärmeausdehnungskoeffizienten hat als das Material der Grundplattenelemente und/oder andere Elemente des Formwerkzeuges.

Die Erfindung wird anhand der beigefügten Zeichnung beispielhaft näher erläutert. Es zeigen:
- Figur 1a-d: - schematische Darstellung der Drapierung von Faserlagen auf Formkernen;
- Figur 2: - schematische Darstellung des Zusammenfügens der Formkerne zu Formkernreihen;
- Figur 3a, 3b: - schematische Darstellung der Formkernreihen mit U-Lagen;

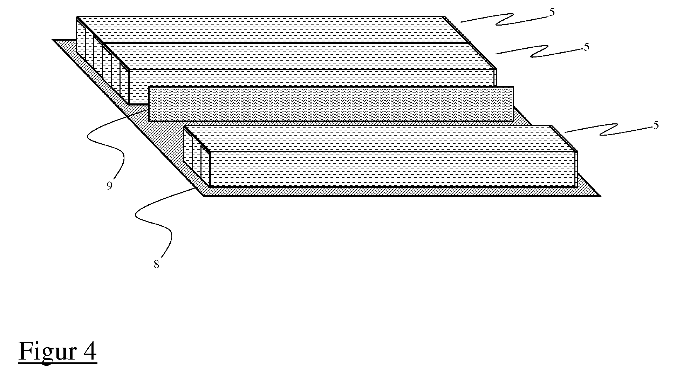

- Figur 4: - Zusammenfügen der Formkernreihen zu dem Form-kernverbund;
- Figur 5: - schematische Darstellung eines fertigen Faserverbundbauteils in der Draufsicht;
- Figur 6: - Schnitt durch ein solches Faserverbundbauteil.

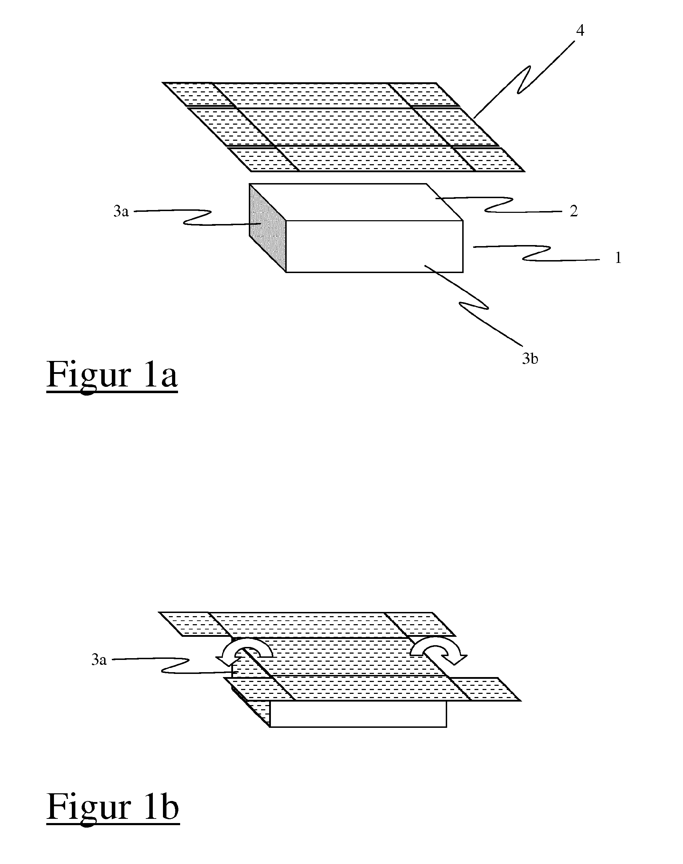

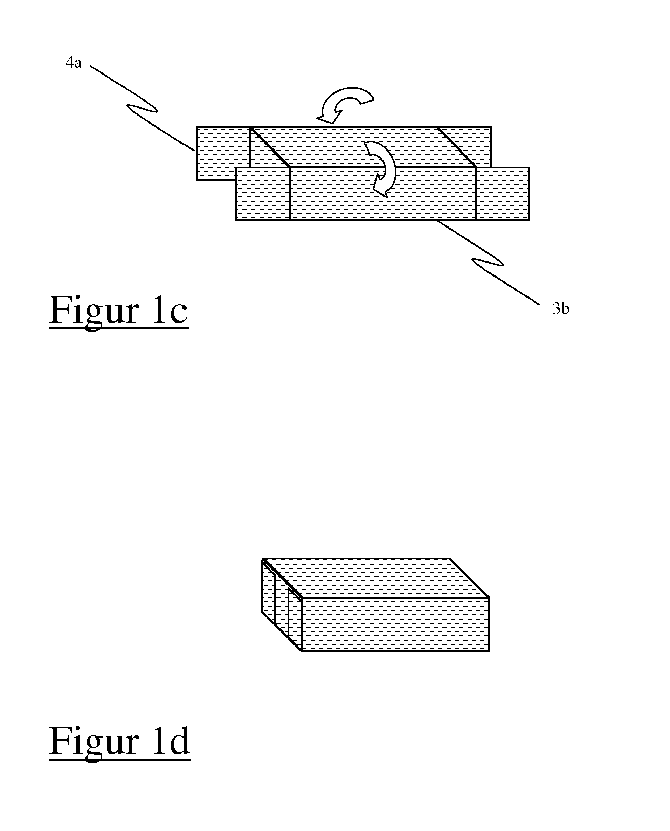

Figur 1 a zeigt einen Formkern 1, der Bestandteil eines nicht dargestellten Formwerkzeuges ist. Der Formkern 1 hat dabei eine Grundfläche 2, die zur Bildung des flächigen Grundelementes des späteren Faserverbundbauteils dient. An die Grundfläche 2 schließen sich Seitenflächen 3a, 3b an, die zur Bildung der Verstärkungselemente des späteren Faserverbundbauteils vorgesehen sind. Die Seitenfläche 3a ist dabei Bestandteil des ersten Paares Seitenflächen, mit den die Formkernreihen gebildet werden, während die daran angrenzende Seitenfläche 3b Teil des zweiten Paares Seitenflächen ist. Die beiden übrigen Seitenflächen der jeweiligen Paare liegen verdeckt auf der hinteren Seite des Formkernes 1.

Im Ausführungsbeispiel der Figuren sind die Formkerne quaderförmig.

Auf diesen Formkern 1 soll nun eine zusammenhängende, gemeinsame Faserlage 4 so drapiert werden, dass sowohl die Grundfläche 2 als auch die jeweiligen Seitenflächen 3a, 3b von der zusammenhängenden, gemeinsamen Faserlage abgedeckt sind. Hierzu wird die Faserlage 4 zunächst auf der Grundfläche 2 des Formkernes 1 im Wesentlichen mittig abgelegt und anschließend das überstehende Material der Faserlage 4 auf die Seitenflächen 3a des ersten Paares Seitenflächen umgelegt, so wie in Figur 1b dargestellt.

Anschließend wird das überstehende Material auf die Seitenflächen 3b des zweiten Paares Seitenflächen umgelegt, so dass nunmehr zumindest sowohl die Grundfläche als auch die anschließenden Seitenflächen 3a, 3b des Formkernes 1 vollständig mit der gemeinsamen, zusammenhängenden Faserlage abgedeckt ist.

Wie in Figur 1c dargestellt, verbleiben von der Faserlage 4 nunmehr nur noch die überstehenden Materialfahnen 4a, die entweder entfernt werden können oder in einem weiteren Schritt, wie in Figur 1d gezeigt, auf die Seitenflächen 3a nochmals umgelegt werden. Hierdurch ergibt sich dann eine hochintegrale Vernetzung der Faserlage.

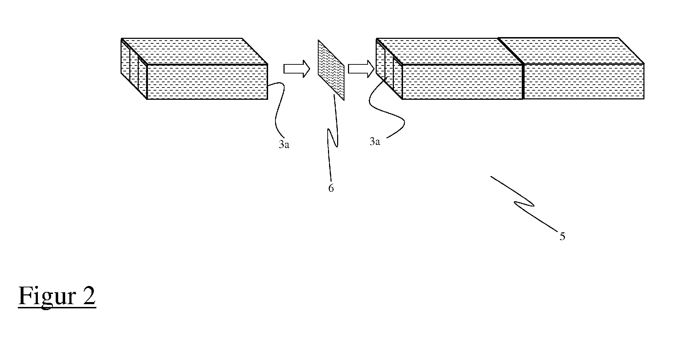

Das in den Figuren 1a bis 1d gezeigte Drapieren einer Faserlage auf dem Formkern wird nun für sämtliche in dem Formwerkzeug vorhandenen Formkerne durchgeführt, so dass sich anschließend eine Vielzahl von mit Faserlagen abgedeckten Formkernen ergibt. Diese so mit Faserlagen abgedeckten Formkerne werden nun, wie in Figur 2 dargestellt, zu mehreren Formkernreihen 5 zusammengefügt. Hierzu werden die mit den Faserlagen abgedeckten Formkerne an ihren Seitenflächen 3a des ersten Paares Seitenfläche aneinandergefügt, so dass sich das an diese Stelle im späteren Faserverbundbauteil gebildete Verstärkungselement sowohl aus Faserlagen des einen Formkernes als auch Faserlagen des anderen Formkernes bildet. Zwischen diesen aneinandergefügten Seitenflächen 3a der verschiedenen Formkerne können beispielsweise Zusatzlagen 6 vorgesehen sein, um die Materialdicke zu erhöhen.

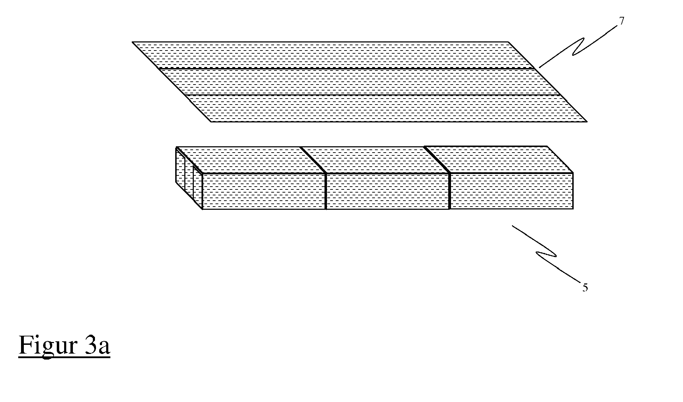

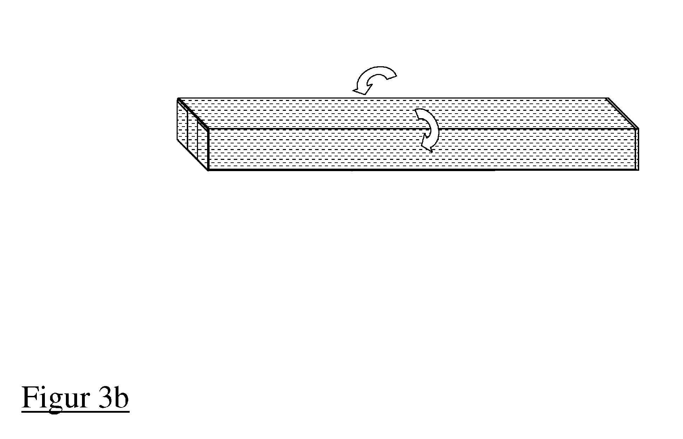

Eine derartige Formkernreihe wird anschließend mit einer U-Faserlage 7 vollständig abgedeckt, und zwar derart, dass die Grundfläche der Formkerne sowie die Seitenflächen 3b des zweiten Paares Seitenfläche mit Hilfe der U-förmigen Faserlage 7 abgedeckt wird. Das Drapieren ist in Figur 3a schematisch dargestellt, während das Ergebnis des Drapiervorganges in Figur 3b gezeigt wird.

Anschließend werden die Formkernreihen 5 auf einer Grundplatte 8 des Formwerkzeuges so angeordnet, dass die verbleibenden Seitenflächen 3b der Formkerne jeweils mit benachbarten Formkernreihen 5 zusammengefügt werden. Die einzelnen Formkerne werden so zu einem gemeinsamen Formkernverbund derart miteinander verbunden, dass Faserlagen von Seitenflächen, an denen zwei benachbarte Formkerne zusammengefügt werden, zumindest einen Teil eines Verstärkungselementes bilden. Hierdurch wird eine hochintegrale, kastenförmige Struktur von Verstärkungselementen hochintegral hergestellt, die eine hohe Steifigkeit aufweist.

Vorteilhafterweise können zwischen den einzelnen Formkernreihen 5 wiederum zusätzliche Faserlagen 9 vorgesehen sein, um die geforderten mechanischen Eigenschaften zu erzielen.

Diese so zu einem Formkernverbund zusammengefügten Formkerne mit ihren einzelnen Faserlagen werden nun in einem Faserverbund-Herstellungsprozess eingebracht, damit das infiltrierte Matrixharz ausgehärtet und das spätere Faserverbundbauteil endgültig hergestellt werden kann.

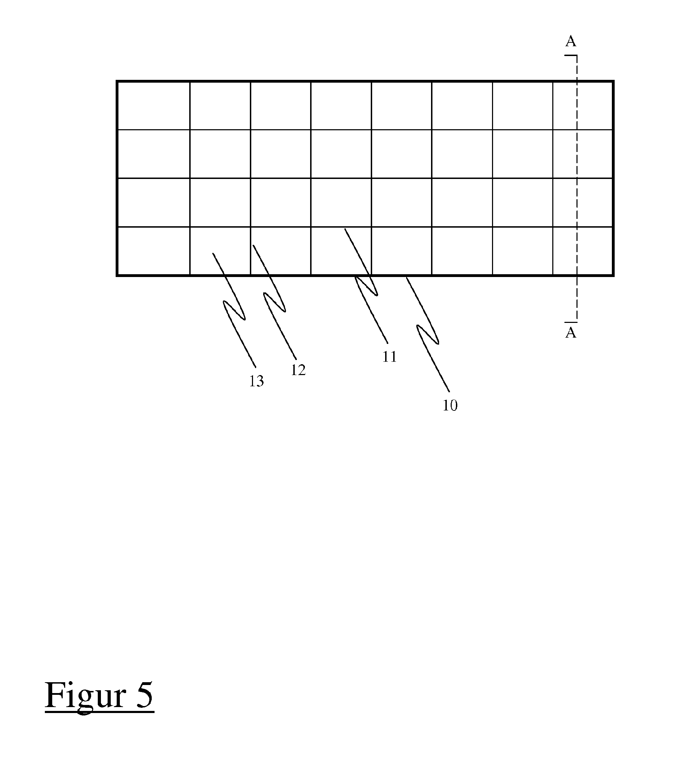

Figur 5 zeigt schematisch ein solches späteres Faserverbundbauteil, das beispielsweise eine Flügelschale mit Stringer-Verstärkungselementen sein kann. Das Faserverbundbauteil weist ein flächiges Grundelement 10 auf, dessen eine Oberfläche beispielsweise die Außenhaut eines Flügels eines Verkehrsflugzeuges sein kann. Auf der Innenseite der Flügelschale ist eine Mehrzahl von Verstärkungselementen 11, 12 angeordnet. Die längs verlaufenden Verstärkungselemente 11 sind dabei Stringerelemente, während die hierzu im Wesentlichen rechtwinklig angeordneten Verstärkungselemente 12 beispielsweise die zusätzliche Funktionen haben können, als Anschlüsse für die Rippen eines Tragflügels zu dienen. Aufgrund der wegen der Lagefixierung der Formkerne auf der Grundplatte hochgenauen Position der Verstärkungselemente können die Rippen ohne Spannungen und zusätzlichem Füllmaterial angeschlossen werden.

Zwischen den Verstärkungselementen 11, 12 werden umgrenzte Teilbereiche des flächigen Grundelementes gebildet. Gegenüberliegende und/oder benachbart angrenzende Verstärkungselemente 11, 12 eines Teilbereiches 13 sowie der Teilbereich selber auch weisen dabei zumindest eine zusammenhängende, gemeinsame Faserlage auf, sodass sich ein hochintegrales Bauteil ergibt.

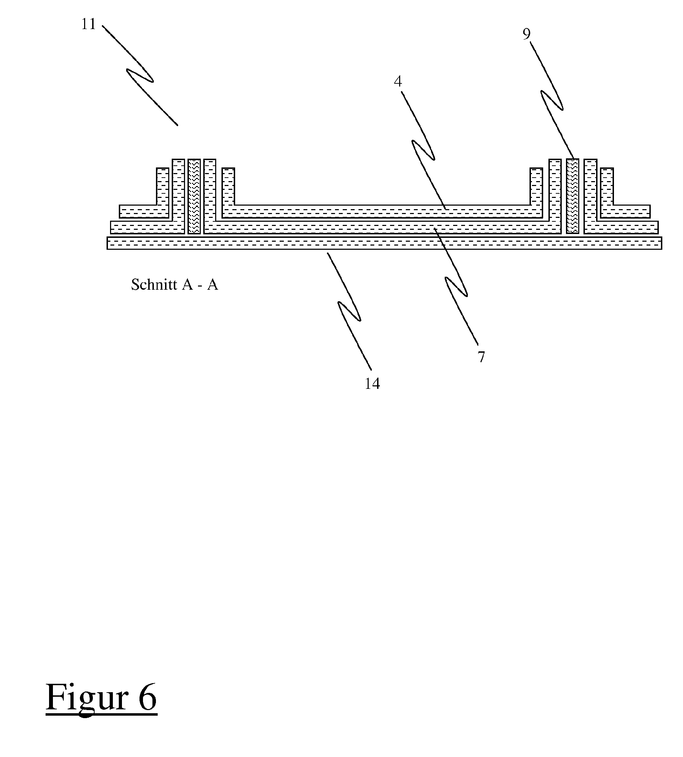

In Figur 6 ist schließlich noch ein Schnitt durch das Faserverbundbauteil der Figur 5 gezeigt. Hierbei ist zu erkennen, wie die Verstärkungselemente 11 hinsichtlich ihrer Faserlagen aufgebaut sind. So weist das linke Verstärkungselement und das rechte Verstärkungselement jeweils eine gemeinsame, zusammenhängende Faserlage 4 auf, die als erstes auf die Formkerne drapiert wurde (vgl. Figur 1a bis 1d). anschließend daran ergibt sich die U-förmige Faserlage 7, mit der die Formkernreihen abgedeckt wurden. Anschließend ist eine Faserlage 14 vorgesehen, welche den äußeren Abschluss des Faserverbundbauteils darstellt. Zwischen den U-förmigen Faserlagen 7 ist noch die Zusatzfaserlage 9 ersichtlich, die zwischen die einzelnen Formkernreihen eingefügt wurde.

Somit weisen die beiden Verstärkungselemente 11 gemeinsame Faserlagen auf, so dass sich ein hochintegrales Bauteil mit einer entsprechenden Stringerverstärkung ergibt.

## Patentansprüche

1. Verfahren zur Herstellung eines Faserverbundbauteils, das aus einem mit einem Matrixharz infiltrierten Faserhalbzeug in einem Formwerkzeug hergestellt wird, wobei das Faserverbundbauteil ein flächiges Grundelement (10) aufweist, auf dem eine Vielzahl von Verstärkungselementen (11, 12) angeordnet ist, mit den Schritten:
a) Bereitstellen eines Formwerkzeuges mit einer Mehrzahl von Formkernen (1), die jeweils eine Grundfläche (2) zur Bildung des flächigen Grundelementes (10) und daran anschließende Seitenflächen (3a, 3b) zur Bildung der Verstärkungselemente (11, 12) aufweisen,
b) Drapieren von Faserlagen (4) auf den Formkernen (1) derart, dass die Grundfläche und die Seitenflächen eines Formkernes durch mindestens eine zusammenhängende, gemeinsame Faserlage abgedeckt sind,
c) Zusammenfügen der mit den Faserlagen (4) abgedeckten Formkerne (1) an den jeweiligen Seitenflächen (3a, 3b) der Formkerne zu einem Formkernverbund derart, dass Faserlagen von Seitenflächen, an denen zwei benachbarte Formkerne zusammengefügt sind, zumindest einen Teil eines Verstärkungselementes (11, 12) bilden, und
d) Durchführen des Faserverbund-Herstellungsprozesses zur Herstellung des Faserverbundbauteils mit integral gebildeten Verstärkungselementen,
wobei die Formkerne an jeweils einem ersten Paar gegenüberliegender Seitenflächen (3a) zu einer Mehrzahl von Formkernreihen (5) und anschließend die Formkernreihen an jeweils einem zweiten Paar gegenüberliegender Seitenflächen (3b) der Formkerne zu dem Formkernverbund derart zusammengefügt werden, dass sich kreuzende Verstärkungselemente gebildet werden.

2. Verfahren nach Anspruch 1, **dadurch gekennzeichnet, dass** jeweils mindestens eine Faserlage (7) auf den zusammengefügten Formkernreihen (5) derart drapiert wird, dass die Grundfläche und das jeweils zweite Paar Seitenflächen der Formkerne abgedeckt sind, bevor die Formkernreihen zu dem Formkernverbund zusammengefügt werden.

3. Verfahren nach Anspruch 1 oder 2, **dadurch gekennzeichnet, dass** mindestens eine Faserlage (14) auf dem zusammengefügten Formkernverbund derart drapiert wird, dass zumindest die Grundflächen der Formkerne abgedeckt sind.

4. Verfahren nach einem der vorhergehenden Ansprüche, **dadurch gekennzeichnet, dass** beim Zusammenfügen zweier Formkerne und/oder Formkernreihen zwischen den jeweiligen Seitenflächen der Formkerne und/oder Formkernreihen eine mindestens zusätzliche Faserlage (6, 9) eingefügt wird.

5. Verfahren nach einem der vorhergehenden Ansprüche, **dadurch gekennzeichnet, dass** die mit den Faserlagen abgedeckten Formkerne auf einer Grundplatte (8) des Formwerkzeuges mit Befestigungsmitteln fixiert werden.

6. Verfahren nach einem der vorhergehenden Ansprüche, **dadurch gekennzeichnet, dass** ein Formwerkzeug mit Formkernen bereitgestellt wird, bei dem die Formkerne ein Material aufweisen, das einen höheren Wärmeausdehnungskoeffizienten hat, als das Material der übrigen Elemente des Formwerkzeuges.

7. Faserverbundbauteil, das aus einem mit einem Matrixharz infiltrierten Faserhalbzeug in einem Formwerkzeug hergestellt ist, bei dem auf einem flächigen Grundelement eine Vielzahl von Verstärkungselementen angeordnet ist, **dadurch gekennzeichnet, dass** zwei gegenüberliegende und/oder benachbart angrenzende Verstärkungselemente (11, 12) mindestens eine zusammenhängende, gemeinsame Faserlage (4, 7) aufweisen.

8. Faserverbundbauteil nach Anspruch 7, **dadurch gekennzeichnet, dass** ein Teilbereich des flächigen Grundelementes, der durch die Verstärkungselemente umgrenzt ist, ebenfalls die zusammenhängende, gemeinsame Faserlage aufweist, die Bestandteil der Verstärkungselemente des jeweiligen Teilbereiches ist.

9. Formwerkzeug zur Herstellung eines Faserverbundbauteils, das aus einem mit einem Matrixharz infiltrierten Faserhalbzeug hergestellt wird, wobei das Faserverbundbauteil ein flächiges Grundelement aufweist, auf dem eine Vielzahl von Verstärkungselementen angeordnet ist, wobei das Formwerkzeug eine Mehrzahl von Formkernen, die jeweils eine Grundfläche zur Bildung des flächigen Grundelementes und daran anschließende Seitenflächen zur Bildung der Verstärkungselemente aufweisen, und mindestens ein Grundplattenelement hat, das zur Aufnahme der mit einer Faserlage abgedeckten Formkerne zum Zusammenfügen der Formkerne zu einem Formkernverbund ausgebildet ist, wobei die Formkerne jeweils Befestigungselemente zur Lagefixierung der Formkerne auf dem Grundplattenelement aufweisen, **dadurch gekennzeichnet, dass** die Formkerne mittels der Befestigungselemente zur Lagefixierung derart ausgebildet sind, dass die Formkerne bei Temperierung sich in Richtung einer Seitenfläche ausdehnen.

10. Formwerkzeug nach Anspruch 9, **dadurch gekennzeichnet, dass** das Formwerkzeug eine Mehrzahl von Formkernreihen-Grundplattenelementen hat, die zur Aufnahme von Formkernen derart ausgebildet sind, dass die Formkerne an jeweils einem ersten Paar gegenüberliegender Seitenflächen zu einer Mehrzahl von Formkernreihen zusammengefügt und mittels ihrer Befestigungselemente auf den Formkernreihen-Grundplattenelementen lagefixiert werden können, und das Formwerkzeug weiterhin ein Formwerkzeug-Grundplattenelement hat, das zur Aufnahme der Formkernreihen-Grundplattenelemente derart ausgebildet ist, dass die auf den Formkernreihen-Grundplattenelementen fixierten Formkerne an jeweils einem zweiten Paar gegenüberliegender Seitenflächen der Formkerne zu einem Formkernverbund zusammengefügt werden können.

11. Formwerkzeug nach Anspruch 9 oder 10, **dadurch gekennzeichnet, dass** die Formkerne ein Material aufweisen, das einen höheren Wärmeausdehnungskoeffizienten hat, als das Material der Grundplattenelemente und/oder andere Elemente des Formwerkzeuges.
